# DEMANDE DE BREVET EUROPEEN

(11) **EP 4 467 445 A1**
(43) Date de publication de la demande: **27.11.2024**
(21) Numéro de dépôt: 24174417.6
(22) Date de dépôt: 07.05.2024
(51) Int. Cl.: B64C 1/14, A62C 2/12, A62C 3/08, B60H 1/24, F24F 13/08

(54) **DISPOSITIF DE VENTILATION COMPORTANT AU MOINS UN VOLET À FERMETURE AUTOMATIQUE, AÉRONEF COMPRENANT AU MOINS UN TEL DISPOSITIF DE VENTILATION**

(30) Priorité: 26.05.2023 FR 2305230
(71) Demandeur: AIRBUS OPERATIONS (S.A.S.), 31060 Toulouse (FR); AIRBUS Operations GmbH, 21129 Hamburg (DE)
(72) Inventeur: FURIASSE PASSALACQUA, Nicolas, 21129 HAMBURG (DE); CASSE, Christophe, 31060 TOULOUSE (FR)
(74) Mandataire: Fantin, Laurent

(57) **Abrégé**

L'invention a pour objet un dispositif de ventilation comportant :
- une grille de ventilation (32) comprenant un cadre (38) délimitant au moins une ouverture (42)
- au moins un volet (44) configuré pour occuper un état ouvert dans lequel le volet (44) dégage au moins partiellement l'ouverture (42) et un état fermé dans lequel le volet (44) obture l'ouverture (42),
- au moins une articulation (46) reliant le volet (44) et le cadre (38),
- un système de maintien en position fermée (48) déformable élastiquement configuré pour pousser et maintenir le volet (44) à l'état fermé,
- un système de maintien en position ouverte (50) fusible, configuré pour maintenir le volet (44) à l'état ouvert à l'encontre du système de maintien en position fermée (48), permettant d'obtenir une fermeture automatique du volet.

L'invention a également pour objet un aéronef comportant au moins un tel dispositif de ventilation.

## Description

La présente demande se rapporte à un dispositif de ventilation comportant au moins un volet à fermeture automatique ainsi qu'à un aéronef comprenant au moins un tel dispositif de ventilation.

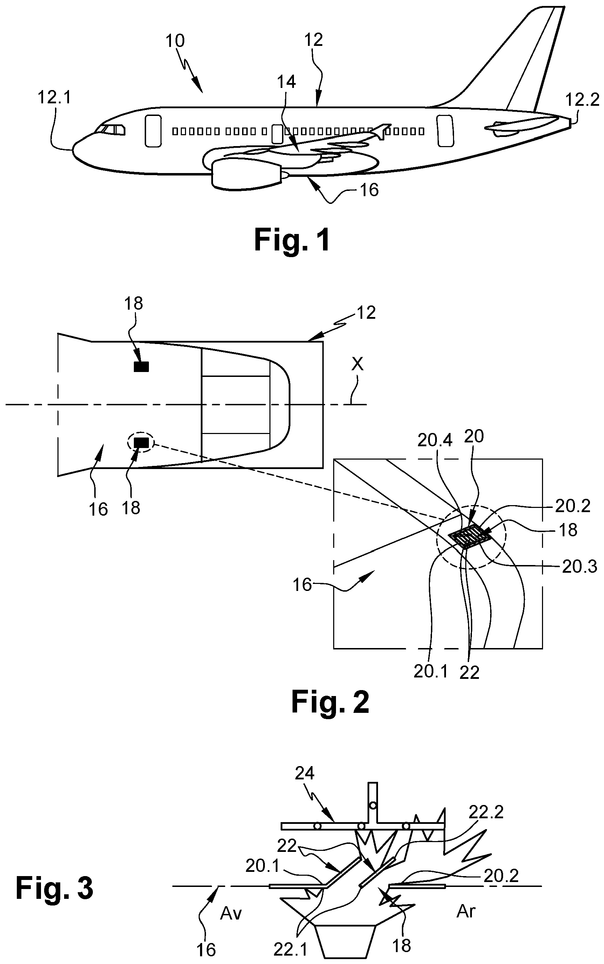

Selon un mode de réalisation visible sur les figures 1 et 2, un aéronef 10 comprend un fuselage 12 qui s'étend entre une pointe avant 12.1 et une pointe arrière 12.2, des ailes 14 positionnées de part et d'autre du fuselage 12 ainsi qu'un caisson central de voilure reliant les ailes 14 et le fuselage 12.

Pour la présente demande, une direction longitudinale X est une direction parallèle à un axe longitudinal, qui est horizontal lorsque l'aéronef est au sol, et s'étend entre les pointes avant et arrière 12.1, 12.2. Une direction transversale est une direction horizontale lorsque l'aéronef est au sol et perpendiculaire à la direction longitudinale. Un plan longitudinal est un plan vertical lorsque l'aéronef est au sol et parallèle à l'axe longitudinal. Un plan transversal est un plan perpendiculaire à l'axe longitudinal. Les termes avant/arrière font référence au sens d'écoulement de l'air autour de l'aéronef en vol, qui s'écoule de l'avant vers l'arrière.

Le fuselage 12 comprend un carénage ventral 16, également connu sous le nom de "Belly Fairing", situé sous le caisson central de voilure ainsi que des grilles de ventilation 18 positionnées au niveau du carénage ventral 16.

Chaque grille de ventilation 18 comprend un cadre 20 présentant des côtés avant et arrière 20.1, 20.2, parallèles entre eux et à la direction transversale, et des côtés droit et gauche 20.3, 20.4, parallèles entre eux et à la direction longitudinale, ainsi que des ailettes 22 transversales, inclinées, reliant les côtés droit et gauche 20.3, 20.4 et parallèles entre elles. Comme illustré sur la figure 3, chaque ailette 22 comprend un premier bord transversal 22.1 orienté vers l'extérieur du fuselage 12 et un deuxième bord transversal 22.2 orienté vers l'intérieur du fuselage 12, le deuxième bord transversal 22.2 étant décalé vers le côté arrière 20.2 par rapport au premier bord transversal 22.1.

Comme illustré sur la figure 3, en cas d'incendie sous le carénage ventral 16, il est nécessaire de protéger des équipements 24 situés dans le fuselage 12 au droit de la grille de ventilation 18 afin que les flammes, qui peuvent pénétrer à l'intérieur du fuselage 12 via la grille de ventilation 18, n'impactent pas les équipements 24.

Pour les protéger, l'aéronef pourrait comprendre des barrières pare-feu positionnées devant les équipements 24 à protéger. Cependant, de telles barrières pare-feu conduiraient à significativement augmenter la masse de l'aéronef.

La présente invention vise à remédier à tout ou partie des inconvénients de l'art antérieur.

A cet effet, l'invention a pour objet un dispositif de ventilation comportant une grille de ventilation qui sépare une zone intérieure et une zone extérieure et comprend un cadre ainsi qu'au moins une ouverture délimitée par le cadre et configurée pour permettre à un flux d'air de s'écouler entre les zones intérieure et extérieure.

Selon l'invention, le dispositif de ventilation comprend au moins un volet configuré pour occuper un état ouvert dans lequel le volet dégage au moins partiellement l'ouverture et un état fermé dans lequel le volet obture l'ouverture, au moins une articulation reliant le volet et le cadre, un système de maintien en position fermée, déformable élastiquement, configuré pour pousser et maintenir le volet à l'état fermé ainsi qu'un système de maintien en position ouverte fusible configuré pour maintenir le volet à l'état ouvert à l'encontre du système de maintien en position fermée. En complément, l'articulation et le système de maintien en position fermée sont confondus.

La combinaison du système de maintien en position fermée déformable élastiquement et du système de maintien en position ouverte fusible permet d'obtenir une fermeture automatique du volet lorsque ledit système de maintien en position ouverte est impacté et dégradé par la chaleur des flammes. Dès que le volet est à l'état fermé, le passage des flammes dans la zone intérieure est limité. Par conséquent, il n'est pas nécessaire de prévoir des barrières pare-feu, en plus du volet, devant des équipements à protéger positionnés au droit de la grille de ventilation.

Selon une autre caractéristique, le volet est positionné dans la zone intérieure.

Selon une autre caractéristique, l'articulation est située en amont de l'ouverture selon la direction amont/aval, le volet présentant un premier bord relié à l'articulation ainsi qu'un deuxième bord distant du premier bord, ledit deuxième bord étant écarté du cadre lorsque le volet est à l'état ouvert et accolé au cadre lorsque le volet est à l'état fermé.

Selon une autre caractéristique, l'articulation comprend une première aile solidaire du cadre, une deuxième aile solidaire du volet ainsi qu'une zone intermédiaire, reliant les première et deuxième ailes, configurée pour rapprocher la deuxième aile du cadre par déformation élastique.

Selon une autre caractéristique, le volet comprend un prolongement recourbé, plaqué contre la deuxième aile de l'articulation et relié à cette dernière.

Selon une autre caractéristique, le système de maintien en position ouverte comprend au moins une entretoise fusible intercalée entre le volet et la grille de ventilation, positionnée au moins partiellement au droit de l'ouverture et configurée pour maintenir le volet écarté de la grille de ventilation à l'encontre des efforts exercés par le système de maintien en position fermée.

Selon une autre caractéristique, chaque entretoise fusible est une bande de matière présentant une largeur comprise entre 10 et 45 mm, de préférence entre 15 et 25 mm, ainsi qu'une épaisseur comprise entre 1 et 6 mm, de préférence entre 2 et 4 mm.

Selon une autre caractéristique, chaque entretoise fusible est en matière plastique ou en matériau composite présentant une température de fusion comprise entre 100°C et 400°C, de préférence entre 150°C et 300°C.

Selon une autre caractéristique, le cadre présente des côtés avant et arrière parallèles entre eux ainsi que des côtés droit et gauche parallèles entre eux, le volet étant relié au côté avant par l'articulation. En complément, le système de maintien en position ouverte comprend des première et deuxième entretoises fusibles, la première entretoise fusible reliant le volet et le côté droit du cadre, la deuxième entretoise fusible reliant le volet et le côté gauche du cadre. Selon une autre caractéristique, chaque entretoise fusible comprend une première extrémité reliée au volet par une première liaison ainsi qu'une deuxième extrémité reliée au cadre par une deuxième liaison, les première et deuxième entretoises fusibles étant reliées au volet par une première liaison commune.

Selon une autre caractéristique, la première liaison comprend une patte pliée, positionnée à équidistance des côtés droit et gauche, présentant une première aile fixée au volet ainsi qu'une deuxième aile à laquelle sont fixées les premières extrémités des première et deuxième entretoises fusibles.

Selon une autre caractéristique, pour chacune des première et deuxième entretoises, la deuxième liaison comprend une patte pliée, positionnée au niveau du côté droit ou gauche du cadre, présentant une première aile fixée au côté droit ou gauche du cadre et une deuxième aile à laquelle est fixée la deuxième extrémité de la première ou deuxième entretoise fusible.

L'invention a également pour objet un aéronef comprenant au moins un dispositif de ventilation selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale de l'aéronef,
- La figure 2 est une vue de dessous d'un carénage ventral d'un l'aéronef comportant des grilles de ventilation,
- La figure 3 est une coupe longitudinale schématique d'une grille de ventilation illustrant un mode de réalisation de l'art antérieur,
- La figure 4 est une vue en perspective selon un premier angle de vue d'un dispositif de ventilation illustrant un mode de réalisation de l'invention,
- La figure 5 est une vue en perspective selon un deuxième angle de vue du dispositif de ventilation visible sur la figure 4,
- La figure 6 est une vue en perspective selon un troisième angle de vue du dispositif de ventilation visible sur la figure 4,
- La figure 7 est une vue arrière du dispositif de ventilation visible sur la figure 4,
- La figure 8 est une coupe longitudinale schématique d'un dispositif de ventilation à l'état ouvert illustrant un mode de réalisation de l'invention, et
- La figure 9 est une coupe longitudinale schématique du dispositif de ventilation visible sur la figure 8 à l'état fermé.

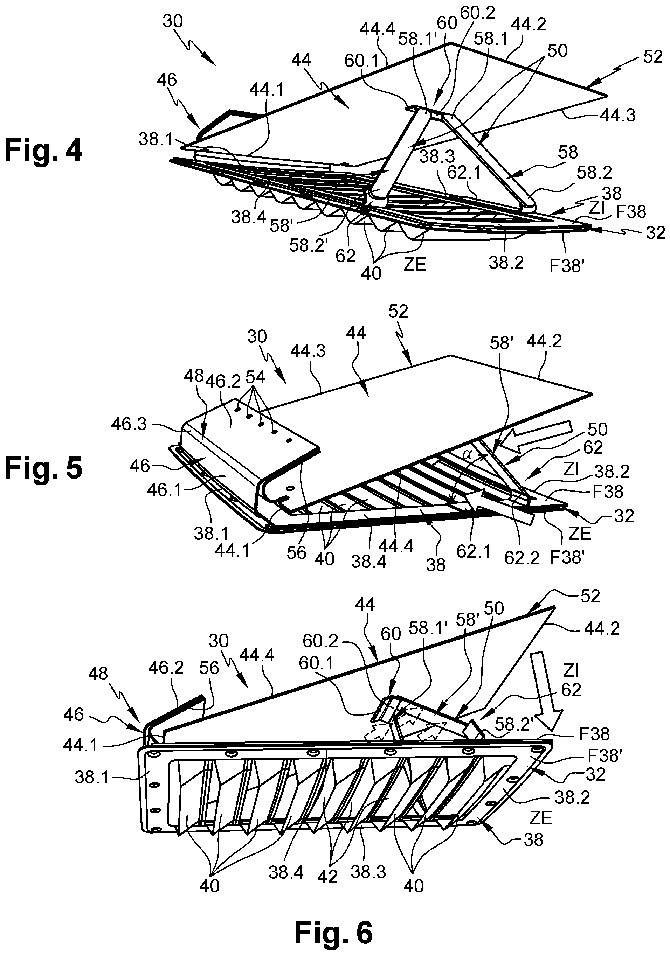

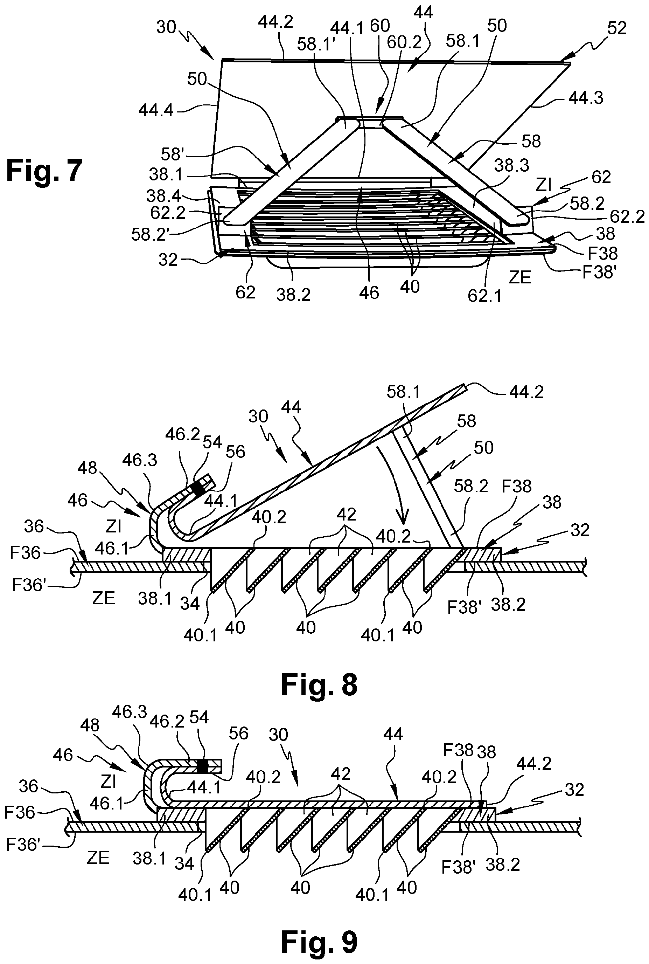

Selon un mode de réalisation visible sur les figures 4 à 9, un dispositif de ventilation 30 comprend une grille de ventilation 32 positionnée au niveau d'un orifice 34 traversant une paroi 36 (visible sur les figures 8 et 9). La paroi 36 sépare une zone intérieure ZI et une zone extérieure ZE. Elle présente une surface intérieure F36 orientée vers la zone intérieure ZI ainsi qu'une face extérieure F36' orientée vers la zone extérieure ZE.

Selon une application, un aéronef comprend au moins un tel dispositif de ventilation 30, la paroi 36 correspondant à une paroi aérodynamique de l'aéronef (paroi en contact avec un flux d'air circulant autour de l'aéronef en vol) comme un carénage ventral d'un fuselage d'un aéronef par exemple.

Selon un mode de réalisation, la grille de ventilation 32 comprend un cadre 38 présentant des côtés avant et arrière 38.1, 38.2 parallèles entre eux et à une première direction transversale ainsi que des côtés droit et gauche 38.3, 38.4 parallèles entre eux et à une deuxième direction longitudinale. La grille de ventilation 32 comprend des ailettes 40 orientées selon la première direction transversale, inclinées, reliant les côtés droit et gauche 38.3, 38.4 et parallèles entre elles. Comme illustré sur les figures 8 et 9, chaque ailette 40 comprend un premier bord transversal 40.1 orienté vers la zone extérieure ZE ainsi qu'un deuxième bord transversal 40.2 orienté vers la zone intérieure ZI, le deuxième bord transversal 40.2 étant décalé vers le côté arrière 38.2 par rapport au premier bord transversal 40.1.

Les côtés avant, arrière, droit et gauche 38.1 à 38.4 présentent des faces intérieures coplanaires F38 (correspondant à la face intérieure du cadre 38) orientées vers la zone intérieure ZI ainsi que des faces extérieures coplanaires F38' (correspondant à la face extérieure du cadre 38) orientées vers la zone extérieure ZE et plaquées contre la face intérieure F36 de la paroi 36 en fonctionnement, tout autour de l'orifice 34.

Selon une configuration, les premiers bords transversaux 40.1 sont coplanaires et décalés vers la zone extérieure ZE par rapport à la face extérieure F38' du cadre 38. Les deuxièmes bords transversaux 40.2 sont coplanaires et situés au niveau de la face intérieure F38 du cadre 38. Bien entendu, l'invention n'est pas limitée à cette configuration pour la grille de ventilation 32. Quel que soit le mode de réalisation, la grille de ventilation 32 comprend un cadre 38 qui délimite au moins une ouverture 42 permettant à un flux d'air de s'écouler entre une zone intérieure ZI et une zone extérieure ZE (de la zone intérieure ZI vers la zone extérieure ZE ou de la zone extérieure ZE vers la zone intérieure ZI). Selon une configuration, la grille de ventilation 32 comprend plusieurs ouvertures 42 entre les ailettes 40 et entre les ailettes 40 et le cadre 38.

Pour la suite de la description, on entend par une ou l'ouverture 42 une ou plusieurs ouverture(s) 42.

Selon une particularité de l'invention, le dispositif de ventilation 30 comprend au moins un volet 44 mobile configuré pour occuper un état ouvert dans lequel le volet 44 dégage au moins partiellement l'ouverture 42 et un état fermé dans lequel le volet 44 obture l'ouverture 42, au moins une articulation 46 reliant le volet 44 et le cadre 38, un système de maintien en position fermée 48 déformable élastiquement configuré pour déplacer le volet 44 de l'état ouvert vers l'état fermé et le maintenir dans cet état fermé ainsi qu'un système de maintien en position ouverte 50 fusible configuré pour maintenir le volet 44 à l'état ouvert à l'encontre du système de maintien en position fermée 48.

Le volet 44 est positionné dans la zone intérieure ZI. Il présente un bord périphérique 52 configuré pour prendre appui contre la face intérieure F38 du cadre 38 surtout son pourtour. Selon une configuration, le bord périphérique 52 du volet 44 est carré ou rectangulaire. Selon un mode de réalisation, le volet 44 est réalisé en un matériau résistant à la chaleur de manière à former une barrière pare-feu. Le volet 44 peut être métallique, comme en acier ou en titane par exemple.

Selon un agencement, le volet 44 est une plaque présentant une épaisseur de l'ordre de 1,5 mm.

Ainsi, la combinaison du système de maintien en position fermée 48 déformable élastiquement et du système de maintien en position ouverte 50 fusible permet d'obtenir une fermeture automatique du volet 44 lorsque le système de maintien en position ouverte 50 est trop dégradé par la chaleur. Lorsque le volet 44 est à l'état fermé, aucune flamme ne peut pénétrer dans la zone intérieure ZI. Par conséquent, il n'est pas nécessaire de prévoir des barrières pare-feu, en plus du volet 44, devant des équipements à protéger positionnés au droit de la grille de ventilation 32.

Selon un agencement, l'articulation 46 est située en amont de l'ouverture 42, au niveau du côté avant 38.1 du cadre 38, et configurée pour relier le volet 44 et le côté avant 38.1 du cadre 38.

Le volet 44 présente un premier bord 44.1 relié à l'articulation 46 ainsi qu'un deuxième bord 44.2 distant du premier bord 44.1, ledit deuxième bord 44.2 étant écarté du côté arrière 38.2 du cadre 38 lorsque le volet 44 est à l'état ouvert et accolé au côté arrière 38.2 du cadre 38 lorsque le volet 44 est à l'état fermé. Le volet 44 présente des bords droit et gauche 44.3, 44.4, sensiblement parallèles entre eux, reliant les premier et deuxième bords 44.1, 44.2.

Selon un mode de réalisation, l'articulation 46 et le système de maintien en position fermée 48 sont confondus et ne forment qu'un seul élément.

L'articulation 46 comprend une première aile 46.1 solidaire du cadre 38 et plus particulièrement du côté avant 38.1, une deuxième aile 46.2 solidaire du volet 44 ainsi qu'une zone intermédiaire 46.3, reliant les première et deuxième ailes 46.1, 46.2, déformable de manière élastique. Selon une configuration, l'articulation 46 se présente sous la forme d'un profilé ayant une section constante dans un plan longitudinal (perpendiculaire à la face intérieure ou extérieure F38, F38' du cadre 38 et à la direction du côté avant 38.1), ce profilé ayant une longueur sensiblement égale ou légèrement inférieure à celle du premier bord 44.1 du volet 44.

La zone intermédiaire 46.3 est courbe et configurée pour rapprocher la deuxième aile 46.2 du cadre 38 par déformation élastique. Ainsi, la zone intermédiaire 46.3 se déforme de manière élastique, la deuxième aile 46.2 formant avec la face intérieure F38 du cadre 38 un premier angle (visible sur la figure 9 et correspondant à l'état fermé du volet 44) sensiblement nul lorsque la deuxième aile 46.2 est soumise à au moins une première contrainte faible ou nulle ainsi qu'un deuxième angle (visible sur la figure 8 et correspondant à l'état ouvert du volet 44) supérieur au premier angle, compris entre 15 et 60°, lorsque la deuxième aile 46.2 est soumise à au moins une deuxième contrainte, supérieure à la première contrainte, tendant à écarter la deuxième aile 46.2 de la face intérieure F38 du cadre 38.

La première aile 46.1 est reliée au cadre 38 par des éléments de liaison comme des rivets par exemple (ou par tout autre moyen approprié). La deuxième aile 46.2 est reliée au volet 44 par des éléments de liaison 54 comme des rivets par exemple (ou par tout autre moyen approprié).

Selon une configuration, le volet 44 comprend un prolongement 56 recourbé, qui forme un C avec le reste du volet 44, plaqué contre la deuxième aile 46.2 de l'articulation 46 et relié à cette dernière par des éléments de liaison 54 comme des rivets ou des vis par exemple.

Bien entendu, l'invention n'est pas limitée à ce mode de réalisation pour l'articulation 46 et le système de maintien en position fermée 48. Ainsi, ces deux éléments pourraient être dissociés. A titre d'exemple, l'articulation 46 pourrait être une charnière et le système de maintien en position fermée 48 pourrait être un ressort poussant le volet 44 à l'état fermé. A titre indicatif, le système de maintien en position fermée 48 est configuré pour exercer un effort minimal de l'ordre de 30 N sur le volet 44 afin de résister à la pression des flammes. Selon un mode de réalisation, le système de maintien en position ouverte 50 comprend au moins une entretoise fusible 58 intercalée entre le volet 44 et la grille de ventilation 32, plus particulièrement entre le volet 44 et le cadre 38 de la grille de ventilation 32, et configurée pour maintenir le volet 44 écarté de la grille de ventilation 32 à l'encontre des efforts exercés par le système de maintien en position fermée 48. Chaque entretoise fusible 58 est positionnée au moins partiellement au droit de l'ouverture 42 de manière à être impactée par un flux d'air s'écoulant de la zone intérieure ZI vers la zone extérieur ZE ou de la zone extérieure ZE vers la zone intérieure ZI, en passant à travers la grille de ventilation 32.

Selon un agencement, le système de maintien en position ouverte 50 comprend des première et deuxième entretoises fusibles 58, 58', la première entretoise fusible 58 reliant le volet 44 et le côté droit 38.3 du cadre 38, la deuxième entretoise fusible 58' reliant le volet 44 et le côté gauche 38.4 du cadre 38.

Selon une configuration, chaque entretoise fusible 58, 58' est une bande de matière présentant une longueur (dimension prise entre le volet 44 et la grille de ventilation 32) de l'ordre de 125 mm, une largeur comprise entre 10 et 45 mm, de préférence entre 15 et 25 mm, ainsi qu'une épaisseur comprise entre 1 et 6 mm, de préférence entre 2 et 4 mm. Bien entendu, l'invention n'est pas limitée à cette géométrie pour l'entretoise fusible 58, 58'. Dans un plan longitudinal (perpendiculaire à la face intérieure F38 du cadre 38 et parallèle aux côtés droit et gauche 38.3, 38.4), chaque entretoise fusible 58, 58' forme avec le cadre 38 un angle de l'ordre de 60°. Dans un plan transversal (perpendiculaire à la face intérieure F38 du cadre 38 et parallèle aux côtés avant et arrière 38.1, 38.2), chaque entretoise fusible 58, 58' forme avec le cadre 38 un angle de l'ordre de 45°.

Selon un mode de réalisation, chaque entretoise fusible 58, 58' est en matière plastique ou en matériau composite, comme un matériau polymère renforcé de fibres de carbone courtes, présentant une température de fusion comprise entre 100°C et 400°C, de préférence entre 150°C et 300 °C. A titre d'exemple, le matériau composite comprend une résine polyétheréthercétone (PEEK).

En présence de flammes pénétrant dans la zone intérieure ZI, les entretoises fusibles 58, 58' sont soumises à une température provoquant leur dégradation. Dès que les entretoises fusibles 58, 58' ne sont plus suffisamment résistantes, elles ne maintiennent plus le volet 44 à l'encontre des efforts exercés par le système de maintien en position fermée 48, qui passe à l'état fermé.

Chaque entretoise fusible 58, 58' comprend une première extrémité 58.1, 58.1' reliée au volet 44 par une première liaison 60 ainsi qu'une deuxième extrémité 58.2, 58.2' reliée au cadre 38 par une deuxième liaison 62.

Selon une configuration, les première et deuxième entretoises fusibles 58, 58' sont reliées au volet 44 par une première liaison 60 commune. Cette première liaison 60 comprend une patte pliée, positionnée à équidistance des côtés droit et gauche 38.3, 38.4, présentant une première aile 60.1 fixée (par collage, soudage ou tout autre moyen approprié) au volet 44 et une deuxième aile 60.2 à laquelle sont fixées (par collage, soudage ou tout autre moyen approprié) les premières extrémités 58.1 des première et deuxième entretoises fusibles 58, 58'. Pour chacune des première et deuxième entretoises 58, 58', la deuxième liaison 62 comprend une patte pliée, positionnée au niveau du côté droit ou gauche 38.3, 38.4 du cadre 38, présentant une première aile 62.1 fixée (par collage, soudage ou tout autre moyen approprié) au côté droit ou gauche 38.3, 38.4 du cadre 38 et une deuxième aile 62.2 à laquelle est fixée (par collage, soudage ou tout autre moyen approprié) la deuxième extrémité 58.2 de la première ou deuxième entretoise fusible 58, 58'.

Bien entendu, l'invention n'est pas limitée à ce mode de réalisation pour les première et deuxième liaisons 60, 62 afin de relier les première et deuxième entretoises fusibles 58, 58' au volet 44 ou au cadre 38.

## Revendications

1. Dispositif de ventilation comportant une grille de ventilation (32) qui sépare une zone intérieure (ZI) et une zone extérieure (ZE) et comprend un cadre (38) ainsi qu'au moins une ouverture (42) délimitée par le cadre (38) et configurée pour permettre à un flux d'air de s'écouler entre les zones intérieure et extérieure (ZI, ZE) ; **caractérisé en ce que** le dispositif de ventilation comprend au moins un volet (44) configuré pour occuper un état ouvert dans lequel le volet (44) dégage au moins partiellement l'ouverture (42) et un état fermé dans lequel le volet (44) obture l'ouverture (42), au moins une articulation (46) reliant le volet (44) et le cadre (38), un système de maintien en position fermée (48) déformable élastiquement configuré pour pousser et maintenir le volet (44) à l'état fermé ainsi qu'un système de maintien en position ouverte (50) fusible configuré pour maintenir le volet (44) à l'état ouvert à l'encontre du système de maintien en position fermée (48) et **en ce que** l'articulation (46) et le système de maintien en position fermée (48) sont confondus.

2. Dispositif de ventilation selon la revendication 1, **caractérisé en ce que** le volet (44) est positionné dans la zone intérieure (ZI).

3. Dispositif de ventilation selon l'une des revendications précédentes, **caractérisé en ce que** l'articulation (46) est située en amont de l'ouverture (42) selon la direction amont/aval, le volet (44) présentant un premier bord (44.1) relié à l'articulation (46) ainsi qu'un deuxième bord (44.2) distant du premier bord (44.1), ledit deuxième bord (44.2) étant écarté du cadre (38) lorsque le volet (44) est à l'état ouvert et accolé au cadre (38) lorsque le volet (44) est à l'état fermé.

4. Dispositif de ventilation selon l'une des revendications précédentes, **caractérisé en ce que** l'articulation (46) comprend une première aile (46.1) solidaire du cadre (38), une deuxième aile (46.2) solidaire du volet (44) ainsi qu'une zone intermédiaire (46.3) reliant les première et deuxième ailes (46.1, 46.2) et configurée pour rapprocher la deuxième aile (46.2) du cadre (38) par déformation élastique.

5. Dispositif de ventilation selon la revendication précédente, **caractérisé en ce que** le volet (44) comprend un prolongement (56) recourbé, plaqué contre la deuxième aile (46.2) de l'articulation (46) et relié à cette dernière.

6. Dispositif de ventilation selon l'une des revendications précédentes, **caractérisé en ce que** le système de maintien en position ouverte (50) comprend au moins une entretoise fusible (58, 58') intercalée entre le volet (44) et la grille de ventilation (32), positionnée au moins partiellement au droit de l'ouverture (42) et configurée pour maintenir le volet (44) écarté de la grille de ventilation (32) à l'encontre des efforts exercés par le système de maintien en position fermée (48).

7. Dispositif de ventilation selon la revendication précédente, **caractérisé en ce que** chaque entretoise fusible (58, 58') est une bande de matière présentant une longueur de l'ordre de 125 mm, une largeur comprise entre 10 et 45 mm ainsi qu'une épaisseur comprise entre 1 et 6 mm.

8. Dispositif de ventilation selon l'une des revendications 6 à 7, **caractérisé en ce que** chaque entretoise fusible (58, 58') est en matière plastique ou en matériau composite présentant une température de fusion comprise entre 100°C et 400°C.

9. Dispositif de ventilation selon l'une des revendications 6 à 8, **caractérisé en ce que** le cadre (38) présente des côtés avant et arrière (38.1, 38.2) parallèles entre eux ainsi que des côtés droit et gauche (38.3, 38.4) parallèles entre eux, le volet (44) étant relié au côté avant (38.1) par l'articulation (46), et **en ce que** le système de maintien en position ouverte (50) comprend des première et deuxième entretoises fusibles (58, 58'), la première entretoise fusible (58) reliant le volet (44) et le côté droit (38.3) du cadre (38), la deuxième entretoise fusible (58') reliant le volet (44) et le côté gauche (38.4) du cadre (38).

10. Dispositif de ventilation selon la revendication précédente, **caractérisé en ce que** chaque entretoise fusible (58, 58') comprend une première extrémité (58.1, 58.1') reliée au volet (44) par une première liaison (60) ainsi qu'une deuxième extrémité (58.2, 58.2') reliée au cadre (38) par une deuxième liaison (62), les première et deuxième entretoises fusibles (58, 58') étant reliées au volet (44) par une première liaison (60) commune.

11. Dispositif de ventilation selon la revendication précédente, **caractérisé en ce que** la première liaison (60) comprend une patte pliée, positionnée à équidistance des côtés droit et gauche (38.3, 38.4), présentant une première aile (60.1) fixée au volet (44) et une deuxième aile (60.2) à laquelle sont fixées les premières extrémités (58.1) des première et deuxième entretoises fusibles (58, 58').

12. Dispositif de ventilation selon l'une des revendications 10 à 11, **caractérisé en ce que**, pour chacune des première et deuxième entretoises (58, 58'), la deuxième liaison (62) comprend une patte pliée, positionnée au niveau du côté droit ou gauche (38.3, 38.4) du cadre (38), présentant une première aile (62.1) fixée au côté droit ou gauche (38.3, 38.4) du cadre (38) et une deuxième aile (62.2) à laquelle est fixée la deuxième extrémité (58.2) de la première ou deuxième entretoise fusible (58, 58').

13. Aéronef comprenant au moins un dispositif de ventilation selon l'une des revendications précédentes.
